Europäisches Patentamt

European Patent Office

Office européen des brevets

(19)

(11) Publication number: **0 159 548 B1**

(12) # EUROPEAN PATENT SPECIFICATION

(45) Date of publication of patent specification: **06.03.91**   (51) Int. Cl.⁵: **G06F 15/76**

(21) Application number: **85103357.1**

(22) Date of filing: **22.03.85**

(54) LSI-Microcomputer.

(30) Priority: **23.03.84 JP 54240/84**

(43) Date of publication of application:
**30.10.85 Bulletin 85/44**

(45) Publication of the grant of the patent:
**06.03.91 Bulletin 91/10**

(84) Designated Contracting States:
**DE FR GB IT**

(56) References cited:
**EP-A- 0 062 431          EP-A- 0 111 399**
**WO-A-80/02881          US-A- 4 153 933**
**US-A- 4 306 163          US-A- 4 349 870**

**ELECTRONIC DESIGN, vol. 31, no. 9, 28th**
**April 1983, pages 215-221, Denville, NJ, US;**
**W. CARTER et al.: "8- and 16-bit processor**
**family keeps pace with fast RAMs"**

(73) Proprietor: **HITACHI, LTD.**
**6, Kanda Surugadai 4-chome**
**Chiyoda-ku, Tokyo 100(JP)**

(72) Inventor: **Nakamura, Hideo**
**2196-287, Hirai Hinodecho**
**Nishitama-gun Tokyo(JP)**
Inventor: **Sawase, Terumi**
**755-1-506, Oaza Kitairiso**
**Sayama-shi(JP)**

(74) Representative: **Patentanwälte Beetz sen. -**
**Beetz jun. Timpe - Siegfried - Schmitt-**
**Fumian**
**Steinsdorfstrasse 10**
**W-8000 München 22(DE)**

## Description

The present invention relates to a micro computer formed as an integrated circuit as defined in the preamble of claim 1 which can be suitably accessed from an external device

Conventionally, in a single-chip microcomputer (MC68705R 3: Motorola; prior art example 1) comprising an integrated nonvolatile memory, memory addresses are sequentially supplied to the integrated memory based on the memory address beforehand set in a bootstrap or the like under control of a CPU disposed in the large scale integrated circuit (to be referred to as LSI hereinbelow), and externally inputted data are stored in an area of the memory at the specified address, or data are outputted therefrom to an external device.

In the prior art example 1, the address of the integrated memory is supplied by the control section of the CPU, hence an external device cannot access an arbitrary memory area by specifying its memory address.

In another microcomputer (8749: Intel; prior art example 2), a CPU disposed in the LSI comprises an internal bus connecting an internal memory, processing elements, an instruction register, a status register, a timer and counter, and a program counter, wherein a memory address externally specified for the internal memory is supplied from the program counter connected to the internal bus and the data are accessed therethrough.

In the prior art example 2, the internal bus of the CPU is operated in a time-sharing manner to access the memory address and data. The control of this time-sharing internal bus includes function for discriminating information from other circuits from the memory address and data, a function for inhibiting the other circuits to access the internal bus while the data in an area at the specified memory address are being accessed, and a function for synchronizing the input/output of external data, for example, for executing the input/output of data whose length is at least four times the internal clock period.

Consequently, in order to access the internal memory from an external device, it is required to operate an internal logic of the CPU and to execute the input/output of the memory address and data with the external device under conditions which satisfy the internal logic.

When a memory integrated in a single-chip microcomputer is accessed from an device externally located with respect to the LSI as described above, it is necessary to operate the internal logic of the CPU and to match the timing as in the prior art example 2; therefore, discrete memory LSI's, for example, memory programming equipments such as EPROM programmers in which data are stored by specifying an arbitrary memory address cannot be utilized, which leads to the problem that a customized memory programming equipment satisfying the interface conditions for the operation of the CPU logic is required.

In addition, when a configuration, such as, or example, a distributed processing system for executing an independent job in each LSI or a multiprocessor system with a common data base is processed by use of a plurality of LSI's it is necessary to operate the internal logic of the CPU and to match the timimg according to the prior art example 2; hence, an external control mechanism must be added to the LSI, which involves the problem that the conditions for interfacing the LSI become more complicated.

In "Advance Data Sheet, 72720 Self-Adaptive E²ROM Single Chip Microcomputer" of SEEQ Technology, Inc., dated February 1983, concerning the 72720 single chip microcomputer, a microcomputer is disclosed formed as an LSI device including an EPROM as a program memory which may be programmed by the processor itself during normal program execution or can be programmed under external control as if it were a standard memory component. For a "slave mode" described in said publication, the program memory is programmed by applying address, data and read/write strobes externally so that the memory may be programmed by standard PROM programmers or in-circuit by a master processor. However, no circuit configuration is provided in the publication so that a specific implementation is not disclosed.

WO 80/02881 discloses an integrated circuit of a microcomputer having a programmable memory which is programmed under control of the CPU. In particular, programming the EPROM, an address is supplied from the CPU to a buffer, and data are supplied from the CPU to a latch, and when a signal is supplied from the CPU to the EPROM, data from the data latch are stored at addresses indicated in said buffer. Also the programming of the programmable memory within the LSI device from an external source is effected by using the processor within the microcomputer for control of the programming operation. In contrast to the present invention, there is no uncoupling of the CPU from the address and data buses within the microcomputer during. programming of the program memory from the external source.

It is the object of the present invention to provide a microcomputer, an EPROM which can be written with a widely used EPROM programmer by executing normal writing, independently of the operation of the CPU included in the microcomputer.

The above object is achieved according to claim 1. The dependent claims relate to prefered embodiments.

The microcomputer of the present invention formed as an LSI comprises :

(A) a CPU block ;

(B) a memory block including an electrically programmable read only memory;

(C) an address bus coupled to the memory block and the CPU block ;

(D) a data bus coupled to the memory block and the CPU block ;

(E) first terminal means for coupling the address bus to an external device;

(F) second terminal means for coupling the data bus to the external device;

(G) external terminal means supplied with a memory write request signal from the external device so as to program the electrically programmable read only memory, and

(H) a data transmitter for transmitting data inputted to the second terminal means to the data bus ; it is **characterized by**

- control means coupled to the external terminal means and the data transmitter and
- an address transmitter for transmitting addresses inputted to the first terminal means to the address bus which is coupled to the control means,

the control means generating signals

- for setting the data transmitter to couple the second terminal means to the data bus, for setting the address transmitter to couple the first terminal means to the address bus,
- and for forcibly uncoupling the CPU block from the address and data bus independently of the operation of the CPU block when the memory write request signal is received via the external terminal means

The present invention will be apparent from the following detailed description with reference to the drawings :

FIG. 1 is a schematic block diagram illustrating an LSI in accordance with an embodiment of the present invention;

FIG. 2 is a schematic circuit configuration diagram depicting an operation example of the control means 5 of FIG. 1;

FIG. 3 is a timing chart illustrating an example of the access timing for accessing a nonvolatile memory;

FIG. 4 is a schematic circuit configuration diagram showing an operation example of the control means 5 comprising a nonvolatile memory; and

FIG. 5 is a system configuration diagram illustrating a multi-CPU system utilizing a plurality of LSI's in accordance with the present invention.

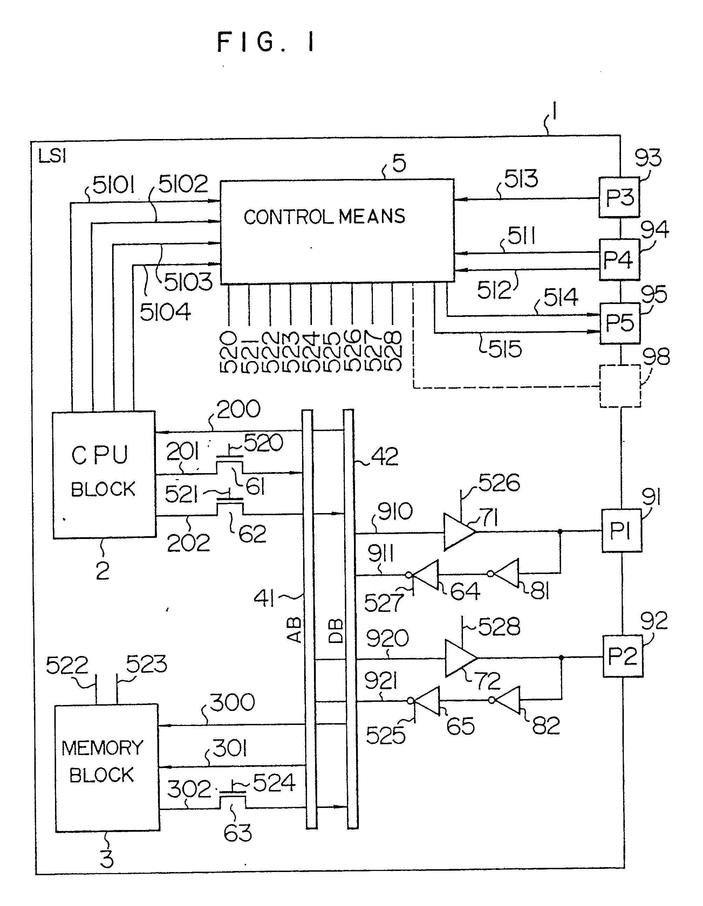

FIG. 1 is a schematic circuit block diagram of an LSI of an embodiment in accordance with the present invention. The LSI 1 comprises, a CPU block 2, a memory block 3, an address bus (AB) 41, a data bus (DB) 42, control means 5, external terminals (P1 to P5) 91-95, address coupling means 61 for delivering signals from the CPU block 2 to the address bus (AB) 41 and which open or close in accordance with a control signal 520 from the control means 5, data coupling means 62 for outputting data from the CPU block 2 to the data bus (DB) 42 and which opens or closes in accordance with a control signal 521 from the control means 5, data coupling with 63 for outputting data from the memory block 3 to the data bus (DB) 42 and which open or close in accordance with a control signal 524 from the control 5, a data transmitter 64 for outputting data from the data terminal (P1) 91 to the data bus (DB) 42 based on an information obtained by inverting a signal in an inverter 81 and which opens or closes in accordance with a control signal 527 from the control means 5, address transmitter 65 for outputting an address from the external terminal (P2) 92 to the address bus (AB) 42 by restoring the information inverted by an inverter 82 and which opens or closes in accordance with a control signal from the control means 5, a data transmitter 71 for outputting data from the data bus (DB) 42 to the external terminal (P1) 91 and which opens or closes in accordance with a control signal from the control means 5, and an address transmitter 73 outputting an address from the address bus (AB) 41 to the external terminal (P2) 92 and which opens or closes in accordance with a control signal 528 from the control means 5.

The inverters 81 and 82 are serially connected to the data and address transmitters 64 and 65, wherein the gate size of each inverter is selected to be small so as to have the function of a bus driver having a level sense function for preventing direct current. The address coupling means circuit 61 and the address transmitter 65 and the data coupling circuits 62 and 63, and the data transmitter 64 are blocked when the control signal from the control means 5 is at low ("L") level (high impedance), while they are conductive when the control signal is at high ("H") level, thereby preventing the information signals ("H" and "L") outputted to the address bus (AB) 41 and the data bus (DB) 42 from colliding with each other.

In addition, the address and data coupling means 61 and 62 may be disposed in the CPU block 2, while the data coupling means 63 may be integrated in the memory block 3.

The CPU block 2 comprises an address output circuit 201 for outputting data to the address bus (AB) 41, a data receiver 200 for receiving data from the data bus (DB) 42, and a data transmitter 202 for transmitting data to the data bus (DB) 42 and transmits access control signals 5101-5104 to the control means 5 for accessing the memory block 3 and external devices (for example, a memory) connected to the first terminal means (P2) 92 and to the second means (P1) 91. The memory block 3 includes an address receiver 301 for receiving addresses from the address bus (AB) 41, a data receiver 300 for receiving data from the data bus (DB) 42, and a data transmitter 302 for transmitting data to the data bus (DB) 42. Read and write accesses with respect to the memory block 3 are controlled by memory block control signals 522 and 523 generated by the control means 5. The second terminal means (P1) 91 are a port for executing data transmission and reception with a device located externally with respect to the LSI 1 and include a data transmitter 911 for transmitting data to the data bus (DB) 42 and a data receiver 910 for receiving data therefrom. The first terminal (P2) 92 means a port for executing address transmission and reception with a device located externally with respect to the LSI 1 and comprises an address transmitter 921 for transmitting addresses to the address bus (AB) 41 and an address receiver 920 for receiving addresses therefrom.

Consequently, the LSI 1 under control of the CPU block 2 has a function for executing data input and output between the memory block 3 and an external device and a function for directly executing read/write operations between an external device and the memory block 3 in the LSI 1 independently of the function of the CPU block 2.

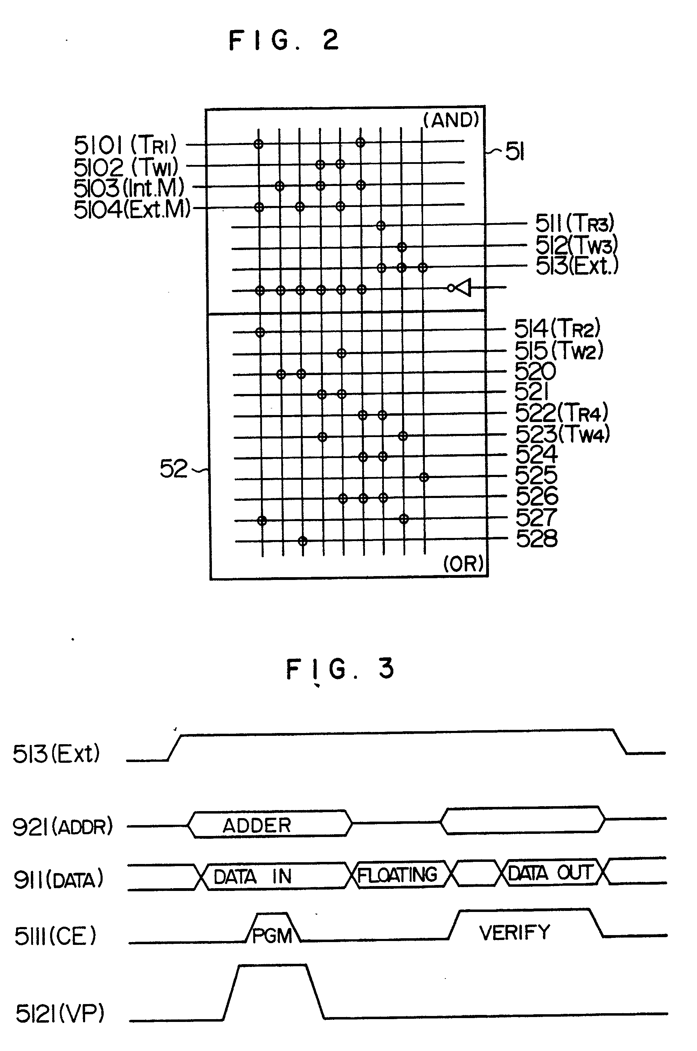

FIG. 2 is a schematic circuit diagram illustrating an operation example of the control means 5. In this example, the control means 5 comprise a programmable logic array (PLA) and generate access control signals from the CPU block 2 to the memory such as control signals 520, 525 and 528 for controlling the address bus (AB) 41, control signals 521, 524, 526 and 527 for controlling the data bus (DB) 42, control signals 522 and 523 for controlling the memory block 3, control signals 514 and 515 for controlling devices located externally with respect to the LSI 1 in response to the inputs of the read timing and write timing, and internal memory specifying signals 5101, 5102, and 5l03, and the mode signal 513, the read signal 511, and the write signal 512 for the memory block 3, respectively inputted from an external device

When the mode signal 513 specifies the external mode, the control means 5 block the control signals 5101-5104 from the CPU block 2, thereby controlling a request supplied from an external device to be preferentially executed.

The control means 5 operated as follows depending on the state of the mode signal 513.

(1) When the mode signal 513 specifies the external mode:

The control signals 5101-5104 from the CPU block 2 are blocked, the control signals 511 and 512 from the external terminal means (P4) 94 are set to be active, and the control signals 522 and 523 are generated for the memory block 3.

(2) When an external memory outside the LSI 1 is accessed under control of the CPU block 2: The control signals 514 and 515 are generated for the external terminal means (P5) 95 in accordance with the control signals 5102 and 5104 from the CPU block 2.

(3) When the memory block 3 is accessed under control of the CPU block 2:

The control signals 522 and 523 are generated for the memory block 3 in accordance with the control signals 5101, 5102 and 5103 from the CPU block 2.

Next, an operation example of the LSI 1 will be described in which the memory block 3 is directly accessed from the first terminal means (P2) 92 and the second (P1) 91. First, the mode specification of the LSI 1 is set to the external mode by use of the external terminal means (P3) 93. Then, an address of an access area in the memory block 3 is inputted from the first terminal means (P2) 92, and a memory read/write signal is inputted from the external terminal means (P4) 94. For a write operation, the write data are inputted to the second terminal means (P1) 91.

In the control means 5, when the mode signal 513 inputted from the external terminal means (P3) 93 is identified to specify the external mode, the control signals 520 and 521 for controlling the address coupling means 61 and the data coupling means 62, respectively are set to the "L" level so as to inhibit an address and data from being outputted from the CPU block 2 to the address bus (AB) 41 and the data bus (DB) 42, respectively. At the same time, the control signal 525 for controlling the address transmitter 65 is set to the "H" level in order to supply an address information from the first terminal means (P2) 92 to the memory block 3 via the address receiver 921, the address bus (AB) 41, and the address receiver 301.

When the write signal 512 is specified to the input of the external terminal means (P4) 94, the control means 5 set the control signal 527 for controlling the data bus (DB) 42, and the data information supplied to the second terminal means (P1) 91 is delivered to the memory block 3 via the data receiver 911, the data bus (DB) 42, and a data receiver 300. At the same time, a write signal is supplied for the memory block control signal 523, and the data are thus written in the memory block 3.

When the read signal 511 is specified to the input of the external terminal means (P4) 94, the control means 5 set the data bus control signal 527 to the "L" level and the data bus control signals 526 and 524 to the "H" level and supplies the read signal 522 to the memory block 3. As a result, the data read from the memory block 3 are delivered to the second terminal means (P1) 91 via the data transmitter 302, the data bus (DB) 42, and the data transmitter 910. Therefore when a read/write operation from an external device is taking place for the memory block 3 in the LSI 1 the data transmission from the CPU block 2 to the address bus (AB) 4l and the data bus (DB) 42 is inhibited, thereby allowing the LSI 1 to be accessed in the same manner as a discrete memory unit.

As compared with the prior art procedure for executing a data input/output operation between the memory block 3 and external terminals under control of the CPU block 2, the processing procedure described hereabove realizes a higher data transfer speed because the transfer operation is executed independently of the CPU block 2 and brings forth the effect that the interface for accessing the memory in the LSI 1 from an external device can be shared with a discrete memory LSI.

The memory block 3 may be a random access memory (RAM), a nonvolatile memory, or the like, that is, a memory that can be formed on the same LSI containing the CPU block 2 which needs only to be connected.

Next, the memory control timing and an operation example of the control means 5 in a microcomputer LSI comprising an ultraviolet ray erasable nonvolatile memory will be described in the following paragraphs.

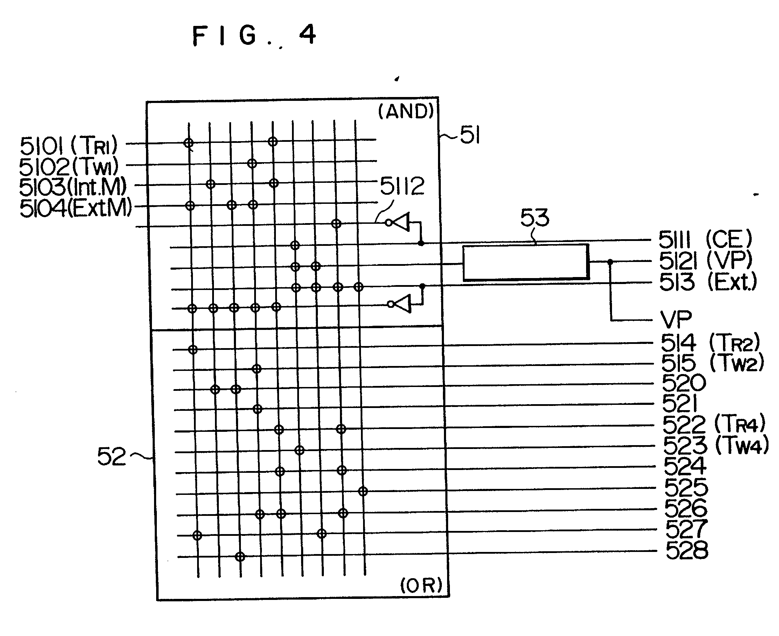

FIG. 3 is a timing chart for accessing a nonvolatile memory. FIG. 4 is a schematic circuit diagram illustrating an operation example of the control means 5 comprising a nonvolatile memory.

For a write operation in the nonvolatile memory, a write voltage 5121 having a high potential and a signal 5121 for providing the program and verify enable timing are supplied together with the mode signal 513, information about the address receiver 921, and information about the data receiver 911. The high-potential voltage is converted to be of the same signal level as other signals by a level exchange circuit 53 and is inputted to the control means 5, while a program and verify enable timing signal 5111 is inputted thereto together with an inverted signal 5112.

The conditions for generating the control signals in the control means 5 are almost the same as explained in conjunction with the circuit diagram of FIG. 2.

The write signal 523 for providing the write timing of the internal memory block 3 is generated only when the signal 5111 for providing the program and verify enable timing and the high voltage signal 5121 are at the "H" level with the mode signal 513 set to the external mode specification. The high-voltage signal 5121 is also supplied directly to the memory block 3 in the nonvolatile memory so as to be utilized as a write power supply. The read signal for providing a read timing is generated in accordance with a read timing signal 5101 from the CPU block 2 for accessing the internal memory block 3 and the external verify condition. The timing conditions of FIG. 3 are the same as those of a discrete nonvolatile memory.

As for the timing signals of FIG. 3 under the external mode condition in the LSI 1 of the present invention, the data, address, write voltage, and program and verify timing signals are directly supplied to the memory block 3 by use of the control signals generated by the control means 5 in accordance with FIG. 4, thereby allowing an access under the same conditions as for accessing a discrete nonvolatile memory LSI

As a result, signals generated by a write device for writing data in a discrete nonvolatile memory can be directly utilized for the externally supplied information about the address receiver 921, information about the data receiver, program and verify enable timing 5111, and high-voltage signal 5121, that is, the write device can be used in a common manner.

As can be seen from the above description, the integrated CPU block 2 is electrically separated from the internal address bus (AB) 41 and the data bus (DB) 42 in the external mode, and the address bus (AB) 41 and the data bus (DB) 42 are configured to be directly connected to the integrated memory block 3 via the external terminal; means hence a test of the integrated memory block 3, for example, can be conducted the same manner as for the discrete memory LSI independently of the test of the CPU block 2, thereby improving the test efficiency such that the test data can be advantageously accumulated, the test program can be independently developed, and the test units can be utilized in a common manner

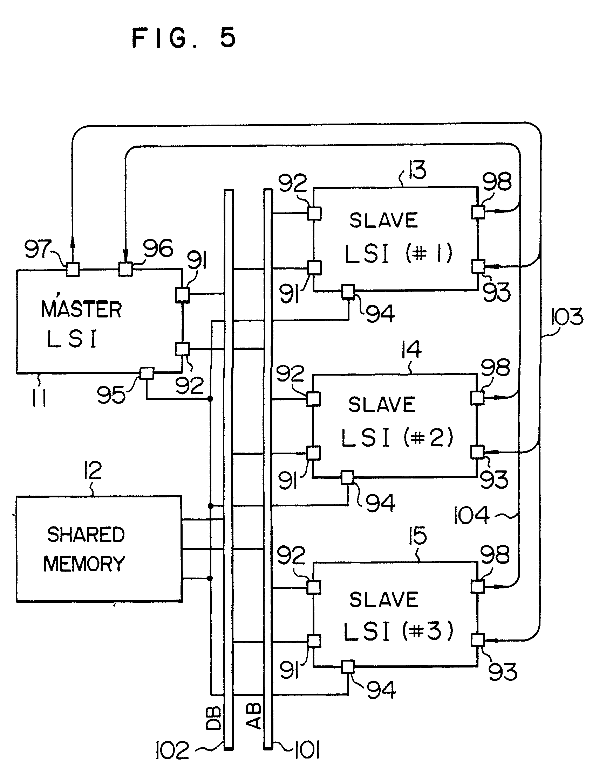

FIG. 5 is a configuration example of a multi-CPU system utilizing a plurality of LSI's as an embodiment of the present invention.

The circuit configuration of FIG. 5 comprises a master LSI 11 which has been illustrated as an embodiment, a shared memory 12, and LSI's 13-15 each comprising a CPU and a memory according to the embodiment and which are slave LSI's #1 to #3 each comprising a slave CPU and a slave memory.

The master LSI 11 and the slave LSI's (#1 to #3) 13-15 include second terminal means 91, for data, first terminal means 92 for addresses external terminal 94 for the internal memory read/ write signal, output terminal means 95 of the external memory read/write signal, and terminal 93 for terminal mode input. These terminal means correspond to the external terminal means 91-95, respectively of the LSI of the above described embodiment. In addition, the circuit configuration of FIG. 5 includes input terminal means 96 for inputting a status data signal from the slave LSI's (#1 to #3) 13-15 to the master LSI 11 output terminal means 97 for indicating a control mode from the master LSI 11 to the slave LSI's (#1 to #3) 13-15, and output terminal means for outputting a status signal from the slave LSI's (#1 to #3) 13-15 to the master LSI 11. As compared with the LSI illustrated as an embodiment in FIG. 1, status output terminal means 98 are added to each slave 151 (#1 to #3) 13-15 (indicated by the dashed lines in FIG. 1).

In addition, the master LSI 11 is implemented by adding the input and output terminal means a 96 and 97 to the LSI illustrated as an embodiment in FIG. 1. The circuit configuration further comprises an address bus (AB) 101, a data bus (DB) 102, a mode control signal line 103, and a status output signal 104 for outputting the status of the slave LSI's (#1 to #3) 13-15.

The slave LSI's (#1 to #3) 13-15 each independently operate by using programs and data stored in the memory of the respective LSI and can execute an operation, for example, to modify a portion of the programs on data.

The following paragraphs describe an example of the operation of the slave LSI's (#1 to #3) 13-15.

In order to transfer data from the shared memory 12 to, for example, the memory in the slave LSI (#1) 13, the slave LSI (#1) 13 outputs an information for updating the shared memory l2 to the status output terminal means 98 of the slave LSI (#l) 13; then the information is delivered to the master LSI 11 via the status output signal line 104. Based on the information inputted to the input terminal means 96, the master LSI 11 outputs a mode signal from the port output terminal means 97 to the mode input terminal means 93 of the slave LSI (#1) 13 in order to set the slave LSI (#1) 13 to the external mode. Next, the master LSI 11 outputs a write signal from the output terminal thereof via the input terminal means 94 of the slave LSI (#1) 13 and sends the address and data information of the shared memory 12 to the address and data terminal means 92 and 91, respectively of the slave LSI (#1) 13. Based on the information inputted from each terminal, the slave LSI (#1) 13 performs the same operation as that of the LSI embodying the present invention, thereby updating the internal memory.

That is, the same access control as applied to the shared memory 12 can be utilized to transfer data to the internal memories of the slave LSI's (#1 to #3) 13-15.

The external mode state is released after the data are completely transferred, and the specified LSI resumes its operation independently of the slave LSI (#1) 13. During the external mode state, the CPU integrated in the slave LSI (#1) 13 is prevented from accessing the internal memory, hence the data being updated in the internal memory of the slave LSI (#1) 13 cannot be used by the master LSI 11.

The same accessing procedure also applies to a data read operation from the internal memories of the slave LSI's (#1 to #3) 13-15 embodying the present invention to the shared memory 12.

The master LSI 11 may be an LSI which is different from the LSI comprising only a CPU as shown in FIG. 1. In this configuration, the CPU in the slave LSI needs only to execute data processing in the same way as for accessing information stored in a memory integrated in the same LSI independently of the state of the devices and integrated CPU's of the other slave LSI's.

Consequently, a distributed processing system can be easily implemented in which jobs are assigned to the respective CPU's depending on the purposes thereof. In addition, controls such as to allocate job programs and data base are performed by the master LSI, hence the slave LSI's can be separated therefrom, which facilitates a multi-CPU system construction.

The LSI described as an embodiment of the present invention can be regarded as an LSI obtained by adding some logic functions to a memory LSI of the prior art; thus it can also be utilized as a memory having a high-reliability or as an intelligent memory by allowing the integrated CPU thereof to execute various processing such as internal memory checks and data work and rearrangement.

In accordance with the present invention, an internal memory can be separated from the internal CPU and can be thus accessed under the same interface conditions as for a discrete memory LSI by specifying the external mode state from a part controlling the LSI mode, thereby facilitating a device located externally with respect to the LSI to access the memory integrated therein.

In accordance with a prefered embodiment, the microcomputer of the present invention comprises an EPROM which can be written with a commonly used EPROM writer, and which can execute normal writing , even if the CPU runs into an abnormal state such as a runaway.

Moreover, various systems such as a distributed processing system in which jobs are assigned to the respective CPU's depending on the purpose thereof can be implemented by combining the LSI's according to the present invention. In addition, since the allocation controls for allocating job programs and data base are conducted by the master LSI, the slave LSI's can be separated therefrom, and thus, a multi-CPU system can be easily configured.

**Claims**

1. A microcomputer formed as an LSI comprising:
   (A) a CPU block (2);
   (B) a memory block (3) including an electrically programmable read only memory;
   (C) an address bus (41) coupled to the memory block (3) and the CPU block (2);
   (D) a data bus (42) coupled to the memory block (3) and the CPU block (2);
   (E) first terminal means (92) for coupling the address bus (41) to an external device;
   (F) second terminal means (91) for coupling the data bus (42) to the external device;
   (G) external terminal means (93, 94) supplied with a memory write request signal from the external device so as to program the electrically programmable read only memory,
   and
   (H) a data transmitter (64) for transmitting data inputted to the second terminal means (91) to the data bus (42); **characterized by**
   - control means (5) coupled to the external terminal means (93, 94) and the data transmitter (64), and
   - an address transmitter (65) for transmitting addresses inputted to the first terminal means (92)to the address bus (41) which is coupled to the control means (5),
   the control means (5) generating signals
   - for setting (527) the data transmitter (64) to couple the second terminal means (91) to the data bus (42),
   - for setting (525) the address transmitter (65) to couple the first terminal means (92) to the address bus (41),
   - and for forcibly uncoupling (520, 521) the CPU block (2) from the address and data bus (41, 42) independently of the operation of the CPU block (2) when the memory write request signal is received via the external terminal means (93, 94).

2. The microcomputer according to claim 1, characterized by address coupling means (61) and data coupling means (62) connected between the output of the CPU block (2) and the address bus (41) and the data bus (42), respectively, and being controlled by the control means (5).

3. The microcomputer according to claim 1 or 2, characterized in that the electrically programmable read only memory of the memory block (3) is an ultraviolet ray erasable nonvolatile memory.

**Revendications**

1. Micro-ordinateur réalisé sous la forme d'un circuit LSI et comprenant :
   (A) un bloc CPU (2);
   (B) un bloc mémoire (3) incluant une mémoire morte électriquement programmable;
   (C) un bus (41) de transmission d'adresses, accouplé au bloc mémoire (3) et au bloc CPU (2);
   (D) un bus (42) de transmission de données, accouplé au bloc mémoire (3) et au bloc CPU (2);
   (E) des premiers moyens formant borne (92) servant à accoupler le bus (41) de transmission d'adresses à un dispositif extérieur;
   (F) des seconds moyens formant borne (91) servant à accoupler le bus (42) de transmission de données au dispositif extérieur;
   (G) des moyens extérieurs formant bornes (93,94) alimentés par un signal de demande d'enregistrement en mémoire provenant du dispositif extérieur de manière à programmer la mémoire morte électriquement programmable, et
   (H) un émetteur de données (64) servant à transmettre des données introduites dans les seconds moyens formant borne (91), au bus (42) de transmission de données;
   caractérisé par
   - des moyens de commande (5) accouplés aux moyens extérieurs formant bornes (93,94) et à l'émetteur de données (64), et
   - un émetteur d'adresses (65) servant à transmettre des adresses envoyées aux premiers moyens formant borne (92), au bus (41) de transmission d'adresses, qui est accouplé aux moyens de commande (5), les moyens de commande (5) produisant des signaux
     - pour régler (527) l'émetteur de données (64) de manière qu'il accouple les seconds moyens formant borne (91) au bus (42) de transmission de données,
     - pour régler (525) l'émetteur d'adresses (65) pour qu'il accouple les premiers moyens formant borne (92) au bus (41) de transmission d'adresses, et

- pour désaccoupler de façon forcée (520,521) le bloc CPU (2) des bus (41,42) de transmission d'adresses et de données, indépendamment du fonctionnement du bloc CPU (2), lorsque le signal de demande d'enregistrement en mémoire est reçu par l'intermédiaire des moyens extérieurs formant bornes (93,94).

2. Micro-ordinateur selon la revendication 1, caractérisé par des moyens (61) d'accouplement d'adresses et des moyens (62) d'accouplement de données, branchés entre la sortie du bloc CPU (2) et respectivement le bloc (41) de transmission d'adresses et le bloc (41) de transmission de données et commandés par les moyens de commande (5).

3. Micro-ordinateur selon la revendication 1 ou 2, caractérisé en ce que la mémoire morte électriquement programmable du bloc mémoire (3) est une mémoire rémanente effaçable à l'aide d'un rayonnement ultraviolet.

**Ansprüche**

1. Als LSI ausgebildeter Mikrocomputer mit:
    (A) einem CPU-Block (2),
    (B) einem Speicherblock (3), der einen elektrisch programmierbaren ROM enthält;
    (C) einem Adressenbus (41), der mit dem Speicherblock (3) und dem CPU-Block (2) gekoppelt ist;
    (D) einem Datenbus (42), der mit dem Speicherblock (3) und dem CPU-Block (2) gekoppelt ist;
    (E) einer ersten Anschlußeinrichtung (92), um den Adressenbus (41) mit einer externen Einrichtung zu koppeln;
    (F) einer zweiten Anschlußeinrichtung (91), um den Datenbus (42) mit der externen Einrichtung zu koppeln;
    (G) externen Anschlußeinrichtungen (93, 94), die ein Speichereinschreib-Anforderungssignal von der externen Einrichtung erhalten, um den elektrisch programmierbaren ROM zu programmieren, und
    (H) einem Datensender (64), um Daten, die der zweiten Anschlußeinrichtung (91) eingegeben werden, zum Datenbus (42) zu übertragen; **gekennzeichnet durch**
    - eine Steuereinrichtung (5), die mit den externen Anschlußeinrichtungen (93, 94) und dem Datensender (64) verbunden ist, und
    - einen Adressensender (65), um der ersten Anschlußeinrichtung (92) eingegebene Adressen dem mit der Steuereinrichtung (5) gekoppelten Adressenbus (41) zu übertragen, wobei die Steuereinrichtung (5) Signale erzeugt,
        - zum Setzen (527) des Datensenders (64), um die zweite Anschlußeinrichtung (91) mit dem Datenbus (42) zu verbinden,
        - zum Setzen (525) des Adressensenders (65), um die erste Anschlußeinrichtung (92) mit dem Adressenbus (41) zu verbinden,
        - und um zwangsweise den CPU-Block (2) von dem Adressen- und Datenbus (41, 42) unabhängig von der Operation des CPU-Blocks (2) abzukoppeln (520, 521), wenn das Speichereinschreib-Anforderungssignal über die externen Anschlußeinrichtungen (93, 94) empfangen wurde.

2. Mikrocomputer nach Anspruch 1, gekennzeichnet durch eine Adressenkopplungseinrichtung (61) und eine Datenkopplungseinrichtung (62), die jeweils zwischen den Ausgang des CPU-Blocks (2) und den Adressenbus (41) und den Datenbus (42) eingeschaltet sind und die von der Steuereinrichtung (5) gesteuert werden.

3. Mikrocomputer nach Anspruch 1 oder 2, dadurch gekennzeichnet, daß der elektrisch programmierbare ROM des Speicherblocks (2) ein mit Ultraviolett-Licht löschbarer nichtflüchtiger Speicher ist.

# FIG. 1

# FIG. 2

5101 (T$_{R1}$)
5102 (T$_{w1}$)
5103 (Int.M)
5104 (Ext.M)

(AND)

51

511 (T$_{R3}$)
512 (T$_{w3}$)
513 (Ext.)

52

514 (T$_{R2}$)
515 (T$_{w2}$)
520
521
522 (T$_{R4}$)
523 (T$_{w4}$)
524
525
526
527
528

(OR)

# FIG. 3

513 (Ext)

921 (ADDR)  ADDER

911 (DATA)  DATA IN  FLOATING  DATA OUT

5111 (CE)  PGM  VERIFY

5121 (VP)

10

F I G . 4

EP 0 159 548 B1

FIG. 5